# EUROPEAN PATENT SPECIFICATION

(11) **EP 4 579 613 B1**
(45) Date of publication and mention of the grant of the patent: **26.08.2026**
(21) Application number: 24220886.6
(22) Date of filing: 18.12.2024
(51) Int. Cl.: G06V 10/82, G06V 20/68, G06V 20/10, A01C 21/00

(54) **SYSTEM AND METHOD TO DETERMINE CROP GROWTH STAGE NUTRIENT DEFICIENCIES**
SYSTEM UND VERFAHREN ZUR BESTIMMUNG VON NÄHRSTOFFMÄNGELN IM PFLANZENWACHSTUMSSTADIUM
SYSTÈME ET PROCÉDÉ POUR DÉTERMINER DES DÉFICIENCES EN NUTRIMENTS DANS LE STADE DE CROISSANCE DES CULTURES

(30) Priority: 27.12.2023 IN 202321089147
(43) Date of publication of application: 02.07.2025
(73) Proprietor: Tata Consultancy Services Limited, Maharashtra (IN)
(72) Inventor: PATIL, RUTURAJ NIVAS, 411057 Pune, Maharashtra (IN); RAJPOOT, NANDAN SINGH, 452018 Indore, Madhya Pradesh (IN); SARANGI, SANAT, 400601 Thane (West) - Maharashtra (IN); SAKKAN, MARIAPPAN, 600113 Chennai, Tamil Nadu (IN); MOHITE, JAYANTRAO, 400601 Thane (West), Maharashtra (IN); SINGH, DINESHKUMAR JANG BAHADUR, 400601 Thane (West), Maharashtra (IN); SEBASTIAN, AJEESHA, 682042 Kochi, Kerala (IN); PAPPULA, SRINIVASU, 500081 Hyderabad, Telangana (IN)
(74) Representative: Goddar, Heinz J.

(56) References cited:
- WO-A1-2019/133973
- US-A1- 2023 274 541

## Description

### CROSS-REFERENCE TO RELATED APPLICATIONS AND PRIORITY

The present application claims priority to Indian application no. 202321089147, filed on December 27, 2023.

### TECHNICAL FIELD

The disclosure herein generally relates to crop health assessment, and, more particularly, to system and method to determine crop growth stage nutrient deficiencies.

### BACKGROUND

Agriculture is a most important factor contributing to livelihoods, sustainability, and food security around the world. Agriculture places high priority on crop monitoring enabling early detection of pests and diseases, optimizing resource use, and promotes sustainable practices. Technological advances in agriculture provides early detection of diseases in crops. Crop filed monitoring supports farmers in making informed decisions, increasing productivity, and minimizing environmental impact, which results in improved economic outcomes and long-term agricultural sustainability. In crop monitoring, nutrients play an important role in plant growth. Nutrient deficiencies reduce crop yields and plant growth. Plants require nutrients in small or large amounts throughout their life cycle and when nutrients are not available in sufficient quantities, plants show symptoms of nutrient deficiency. Nutrient deficiencies affect plant growth and yield. Diagnosing plant nutrient deficiencies is important for farmers and fertilizer industries to gain optimum crop production and minimize cultivation costs.

Existing techniques identifies macronutrient deficiencies based on leaf color index and plant nutrient deficiencies such as nitrogen, Sulphur, and the like. Existing image processing methods analyze digital image and measures plant morphological feature from a health perspective. Such methods lack in identifying macronutrients and micronutrients deficiency. Alternatively, diagnosing nutrient deficiencies based on full plant image analysis according to plant growth stages reduces accuracy of deficiency detection. Some methods diagnose nutritional deficiencies in indoor daily light source condition only.

Identifying nutrient deficiencies with aerial photographs lacks top to bottom scanning of plants which causes ineffective diagnose of deficiencies. Some methods use color and shape of the leaves only and not all morphological features to diagnose the nutrient deficiency. Some existing techniques uses morphological features such as length, thickness, and the width of each crop part including a leaf, a node, a flower, and a fruit but they do not detect color of leaves, spots on leaves, curling of leaves with plant growth stage. WO 2019/133973 A1 discloses an example of aerial photographs used to determine crop health.

Existing techniques diagnosing nutrient deficiencies are very expensive and time consuming. Diagnosing correct nutrient deficiencies in the plant is very challenging based on plant image analysis during the cropping season. Detecting and classifying nutrient deficiencies in each crop through analysis study of plant growth stages and leaf characteristics is tedious and time consuming. Potentially it is essential to help farmers adjust the supply of nutrients to plants, color, plant health, leaf position, and shape to determine nutrient deficiencies.

### SUMMARY

Embodiments of the present disclosure present technological improvements as solutions to one or more of the above-mentioned technical problems recognized by the inventors in conventional systems. For example, in one embodiment, a system to determine crop growth stage nutrient deficiencies is provided. The system includes receiving from an image capturing device controlled by one or more hardware processor, a plurality of crop images of one or more crop fields and a crop age calculated from a planting day to a current day, wherein for each crop the image capturing device captures a top view, a front view, a right side view and a left side view and each crop field includes two or more field crops. Further a trained single shot deep learning network determines a current crop growth stage from a plurality of crop growth stages for each crop by extracting a plurality of morphological features associated with the crop. The plurality of crop growth stages comprise at least one of a vegetative stage, a flowering stage, and a maturity stage. Further, a balanced plant nutrition index (BPNI) value is computed to classify a health state of the crop into one of a healthy crop or an unhealthy crop based on healthy morphological features, the crop growth stage of the crop and the plurality of morphological features.

Further, the unhealthy crop is segmented into a plurality of regions comprising a lower leaf, a middle leaf, an upper leaf, and a terminal bud region based on pixel length, and identifying at least one affected area associated with the plurality of regions, wherein the affected area includes at least one of a leaf discoloration, and a leaf having white stripes, dead spot, curling, burns, and stains. Further, a plurality of nutrient deficiencies corresponding to the current crop growth stage of the unhealthy crop are identified based on the affected area associated with at least one region.

Further, for the unhealthy crop a first nutrient deficient percentage and a second nutrient deficient percentage is computed based on the corresponding crop growth stage (i) a first nutrient deficient percentage for each deficiency having a high significance nutrients and (ii) a second nutrient deficient percentage of each deficient having a low significance nutrients. Furthermore, for the unhealthy crop a first nutrient deficiency score and a second nutrient deficiency score is computed. The first deficiency score is a product of average of nutrient deficient percentage of all high significance nutrients and a high weight. The second deficiency score is the product of average of nutrient deficient percentage of all low important nutrients and a low weight.

Then, a total nutrient deficiency score is computed by averaging a sum of the first nutrient deficiency score, the second nutrient deficiency score, and the BPNI, and recommending the deficient nutrients for the unhealthy crop when the total nutrient deficiency score is at least within a range level.

In another aspect, a method to determine crop growth stage nutrient deficiencies is provided. The method includes receiving from an image capturing device controlled by one or more hardware processor, a plurality of crop images of one or more crop fields and a crop age calculated from a planting day to a current day, wherein for each crop the image capturing device captures a top view, a front view, a right side view and a left side view and each crop field includes two or more field crops. Further a trained single shot deep learning network determines a current crop growth stage from a plurality of crop growth stages for each crop by extracting a plurality of morphological features associated with the crop. The plurality of crop growth stages comprise at least one of a vegetative stage, a flowering stage, and a maturity stage. Further, a balanced plant nutrition index (BPNI) value is computed to classify a health state of the crop into one of a healthy crop or an unhealthy crop based on healthy morphological features, the crop growth stage of the crop and the plurality of morphological features.

Further, the unhealthy crop is segmented into a plurality of regions comprising a lower leaf, a middle leaf, an upper leaf, and a terminal bud region based on pixel length, and identifying at least one affected area associated with the plurality of regions, wherein the affected area includes at least one of a leaf discoloration, and a leaf having white stripes, dead spot, curling, burns, and stains. Further, a plurality of nutrient deficiencies corresponding to the current crop growth stage of the unhealthy crop are identified based on the affected area associated with at least one region.

Further, for the unhealthy crop a first nutrient deficient percentage and a second nutrient deficient percentage is computed based on the corresponding crop growth stage (i) a first nutrient deficient percentage for each deficiency having a high significance nutrients and (ii) a second nutrient deficient percentage of each deficient having a low significance nutrients. Furthermore, for the unhealthy crop a first nutrient deficiency score and a second nutrient deficiency score is computed. The first deficiency score is a product of average of nutrient deficient percentage of all high significance nutrients and a high weight. The second deficiency score is the product of average of nutrient deficient percentage of all low important nutrients and a low weight.

Then, a total nutrient deficiency score is computed by averaging a sum of the first nutrient deficiency score, the second nutrient deficiency score, and the BPNI, and recommending the deficient nutrients for the unhealthy crop when the total nutrient deficiency score is at least within a range level.

In yet another aspect, provides one or more non-transitory machine-readable information storage mediums comprising one or more instructions, which when executed by one or more hardware processors perform actions includes receiving from an image capturing device controlled by one or more hardware processor, a plurality of crop images of one or more crop fields and a crop age calculated from a planting day to a current day, wherein for each crop the image capturing device captures a top view, a front view, a right side view and a left side view and each crop field includes two or more field crops. Further a trained single shot deep learning network determines a current crop growth stage from a plurality of crop growth stages for each crop by extracting a plurality of morphological features associated with the crop. The plurality of crop growth stages comprise at least one of a vegetative stage, a flowering stage, and a maturity stage. Further, a balanced plant nutrition index (BPNI) value is computed to classify a health state of the crop into one of a healthy crop or an unhealthy crop based on healthy morphological features, the crop growth stage of the crop and the plurality of morphological features.

Further, the unhealthy crop is segmented into a plurality of regions comprising a lower leaf, a middle leaf, an upper leaf, and a terminal bud region based on pixel length, and identifying at least one affected area associated with the plurality of regions, wherein the affected area includes at least one of a leaf discoloration, and a leaf having white stripes, dead spot, curling, burns, and stains. Further, a plurality of nutrient deficiencies corresponding to the current crop growth stage of the unhealthy crop are identified based on the affected area associated with at least one region.

Further, for the unhealthy crop a first nutrient deficient percentage and a second nutrient deficient percentage is computed based on the corresponding crop growth stage (i) a first nutrient deficient percentage for each deficiency having a high significance nutrients and (ii) a second nutrient deficient percentage of each deficient having a low significance nutrients. Furthermore, for the unhealthy crop a first nutrient deficiency score and a second nutrient deficiency score is computed. The first deficiency score is a product of average of nutrient deficient percentage of all high significance nutrients and a high weight. The second deficiency score is the product of average of nutrient deficient percentage of all low important nutrients and a low weight.

Then, a total nutrient deficiency score is computed by averaging a sum of the first nutrient deficiency score, the second nutrient deficiency score, and the BPNI, and recommending the deficient nutrients for the unhealthy crop when the total nutrient deficiency score is at least within a range level.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG.1 is an illustrative system (alternatively referred as crop growth nutrient system), in accordance with some embodiments of the present disclosure.
FIG.2 illustrates a block diagram of an example crop for determining growth stage nutrient deficiency level, in accordance with an embodiment of the present disclosure.
FIG.3A and FIG.3B depicts a flow diagram of an example process for determining growth stage nutrient deficiency level using the system of FIG. 1, in accordance with an embodiment of the present disclosure.
FIG.4 depicts a crop growth stage identifier determining a current crop growth stage of each crop from a crop image using the system of FIG.2, in accordance with an embodiment of the present disclosure.
FIG.5 depicts a crop health assessor to determine health state of the crop of each crop from the crop image using the system of FIG.2, in accordance with an embodiment of the present disclosure.
FIG.6 depicts nutrient deficiencies detected for an unhealthy crop using the system of FIG.2, in accordance with an embodiment of the present disclosure.
FIG.7 depicts a total nutrient deficiency score computed for the deficient nutrients for the unhealthy crop using the system of FIG.2, in accordance with an embodiment of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

### GLOSSARY:

As used herein, the term "crop health" refers to a healthy crop having all nutrients as required in proper quantities.

"Crop nutrient deficiency" refers to nutrient deficiencies symptoms that occurred in the crop.

"Crop growth stage nutrients" refers to nutrients required for different growth stage.

The advent of image processing technology in agriculture offers a potentially effective means of extracting "crop health" information to monitor crop growth. Adopting precision agriculture practices associated with the application of spatially variable inputs to improve the efficiency of agricultural production requires deployment of accurate and reliable crop monitoring techniques. Recent advances in precision agriculture over the past few years have substantially enhanced the efficiency of applying spatially variable agronomic inputs for irrigation, such as fertilizers, pesticides, seeds, and water. This can be attributed to the increasing number of innovations that can be achieved using new technologies that are capable of monitoring field crops for varying spatial and temporal changes.

Existing technique identify nutrient deficiency based on leaf color index and identifies only few nutrient deficiencies in plant like nitrogen, sulphur deficiency and the like. Image processing methods like analysis of digital Image and measuring the plant morphological feature from a health perspective lack in identifying macronutrients and micronutrients deficiency.

In another existing technique nutrient deficiency is not diagnosed based on full plant image analysis according to the plant growth stage which causes less accurate detection of deficiencies. Some techniques diagnose nutrient deficiency in indoor daily light source condition only. In another existing method nutrient deficiencies are identified with aerial photographs lacking top to bottom scanning of plants which causes ineffective diagnose of deficiencies. This use color and shape of the leaves only and not all morphological features to diagnose the nutrient deficiency.

Diagnosing correct nutrient deficiencies in the plant is very challenging based on plant image analysis during the cropping season. Normally plant requires sixteen essential elements for proper growth, development and complete the life cycle. When nutrients are not available in sufficient quantity, plants show nutrient deficiency symptoms. It is very challenging to apply the fertilizers according to the correct nutrient deficiency in the plant, based on the plant image during cropping season.

Major challenges for determining crop growth stage nutrient deficiencies includes,
1. Diagnosing the nutrient deficiency without disturbing the plant and soil is within a short amount of time (in situ diagnosis).
2. Diagnosing the correct nutrient deficiency based on visual image analysis in different crop growth stages.
3. Measuring the plant morphological features such as a leaf discoloration, a shape and size of leaf, a plant growth disorder or deficiency leaf position, and combination thereof.

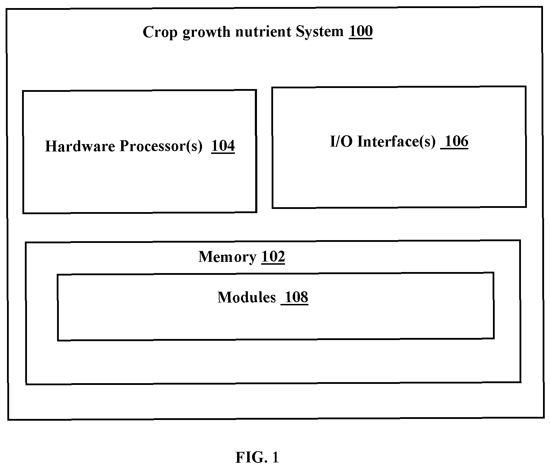

Embodiments herein provide a method and system for determining crop growth stage nutrient deficiencies. The system may be alternatively referred as a crop growth stage nutrient system. The system enables assessing nutrient deficiency using image processing techniques according to current crop growth stage. Plants require nutrients for proper growth and development. Due to nutrient deficiencies, plants exhibit various morphological symptoms. The method enables diagnosing crop health nutrient deficiencies in plant by evaluating morphological features of the plant using a balanced plant nutrition index (BPNI) and full plant images analysis. Diagnosing nutrient deficiencies at current crop growth stage can be more beneficial for recommendation of fertilizer application during the cropping season to get the optimum production. Diagnosing nutrient deficiency symptoms based on visual image analysis can help apply sufficient amounts of nutrients at the right time to achieve optimal crop production. Correct plant nutrient deficiencies are important for farmers and fertilizer industries to gain optimum crop production and minimize the cost of cultivation. Identifying overall nutrient deficiency level is challenging and useful for recommendation of fertilizer application. Nutrient deficiency with crop growth stage is beneficial for recommendation of fertilizer application during the cropping season to achieve optimal production. The disclosed system is further explained with the method as described in conjunction with FIG.1 to FIG.7 below.

Referring now to the drawings, and more particularly to FIG.1 through FIG.7, where similar reference characters denote corresponding features consistently throughout the figures, there are shown preferred embodiments, and these embodiments are described in the context of the following exemplary system and/or method.

FIG. 1 is an illustrative system (alternatively referred as crop growth nutrient system), in accordance with some embodiments of the present disclosure. In an embodiment, the batch processing system 100 includes processor (s) 104, communication interface (s), alternatively referred as or input/output (I/O) interface(s) 106, and one or more data storage devices or memory 102 operatively coupled to the processor (s) 104. The system 100, with the processor(s) is configured to execute functions of one or more functional blocks of the system 100.

Referring to the components of the system 100, in an embodiment, the processor (s) 104 can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the processor(s) 104 is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

The I/O interface(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices (nodes) of the system 100 to one another or to another server.

The memory 102 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

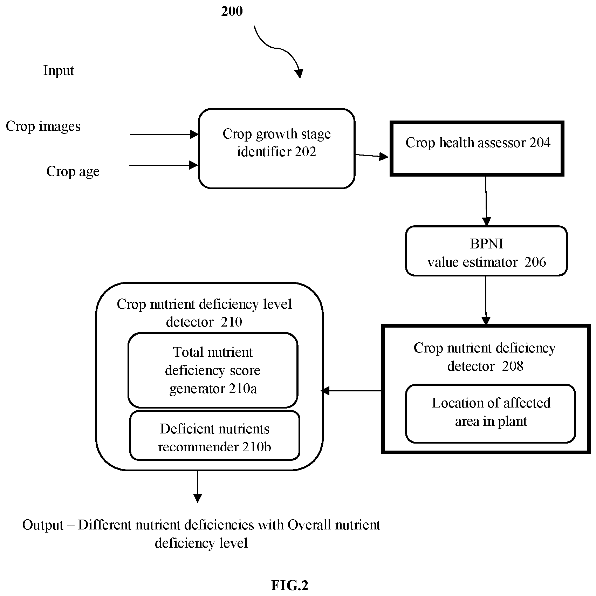

In an embodiment, the memory 102 includes a plurality of modules 108 can also include various sub-modules as depicted in FIG.2 such as a crop growth state identifier 202, a crop health assessor 204, a BPNI value unit 206, a crop nutrient deficiency detector 208, and a crop nutrient deficiency level detector 210. The plurality of modules 108 include programs or coded instructions that supplement applications or functions performed by the system 100 for executing different steps involved in the process of determining crop growth stage nutrient deficiencies of the system 100. The plurality of modules 108, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 108 can be used by hardware, by computer-readable instructions executed by the one or more hardware processors 104, or by a combination thereof.

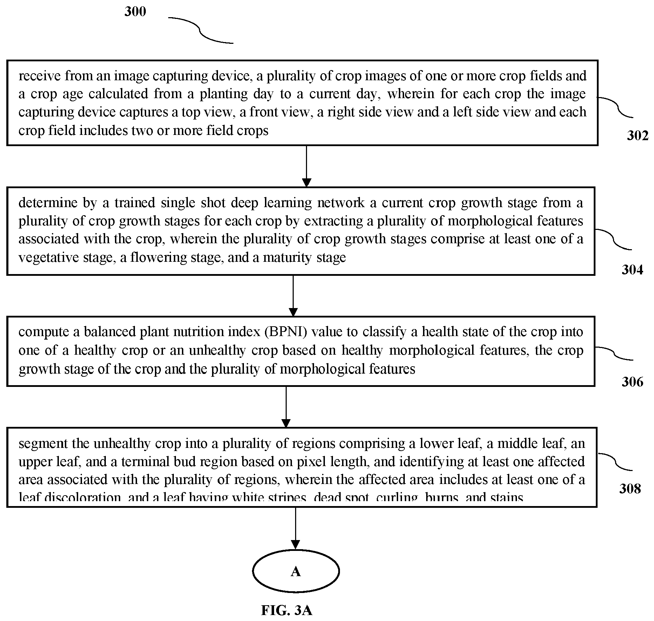

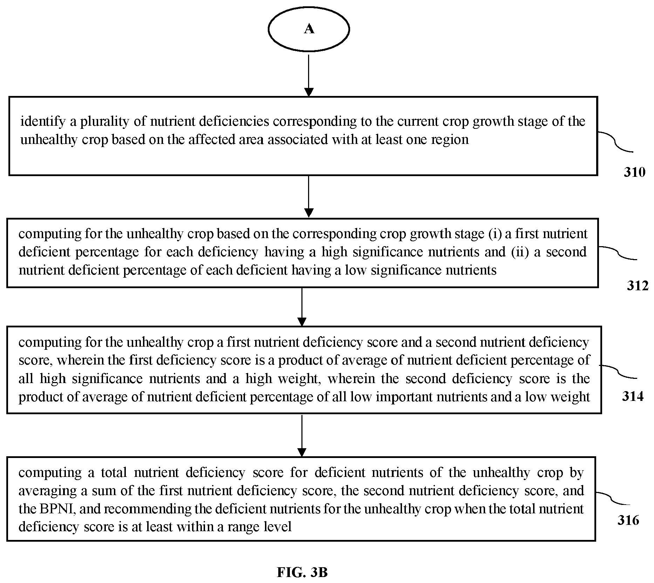

The memory 102 may comprise information pertaining to input(s)/output(s) of each step performed by the processor(s) 104 of the system 100 and methods of the present disclosure. Functions of the components of system 100, for identifying malicious agent while handling user request having at least one sensitive attribute, are explained in conjunction with FIG.2, FIG.3A and FIG.3B providing flow diagram, architectural overviews, and performance analysis of the system 100.

FIG.2 illustrates a block diagram of an example crop for determining growth stage nutrient deficiency level, in accordance with an embodiment of the present disclosure. The system 200 may be an example of the system 100 (FIG.1). In an example embodiment, the system 200 may be embodied in, or is in direct communication with the system, for example the system 100 (FIG.1). In an embodiment, the system 200 may be alternatively referred as a data privacy risk assessment system. The system 200 includes a crop growth stage identifier 202, a crop health assessor 204, a BPNI value unit 206, a crop nutrient deficiency detector 208, and a crop nutrient deficiency level detector 210.

Referring to an example, where a farmer requests the system to determine growth nutrient deficiencies of the crop from a crop field by providing a plurality of crop images as input. The farmer captures a plurality of crop images via an image capturing device. The system 200 analyses the plurality of crop images to determine nutrient deficiencies of the crop.

The said method is suggested for continuous monitoring of plant health status. There are number of diseases depending on various plant species. Treatment for these diseases are also different. So having the clarity of disease is the most important factor affecting plant health to prevent it. This method analyses the plurality of crop images and classifies the nutrient deficiencies in crop by analyzing their crop growth stage and examining leaf characteristics. This helps farmers to adjust the supply of nutrients to the plant. The three main characteristics for identifying nutrient deficiencies are color, crop health, location and shape of a leaf and combination thereof.

The crop growth state identifier 202 receives the plurality of crop images of one or more crop fields and a crop age calculated from a planting day to a current day. From each crop a plurality of morphological features associated with the crop are extracted to determine a current crop growth stage.

The crop health assessor 204 assesses a health state of the crop into at least one of a healthy crop or an unhealthy crop.

The BPNI value unit 206 calculates the balanced plant nutrition index (BPNI) value to classify the health state of the crop.

The crop nutrient deficiency detector 208 determines a plurality of regions of the leaf of the unhealthy crop and identifies a plurality of nutrient deficiencies corresponding to the current crop growth stage of the unhealthy crop.

The crop nutrient deficiency level detector 210 determines nutrient deficiency score and overall nutrient deficiency level.

FIG.3A and FIG.3B depicts a flow diagram of an example process for determining growth stage nutrient deficiency level using the system of FIG.1, in accordance with an embodiment of the present disclosure.

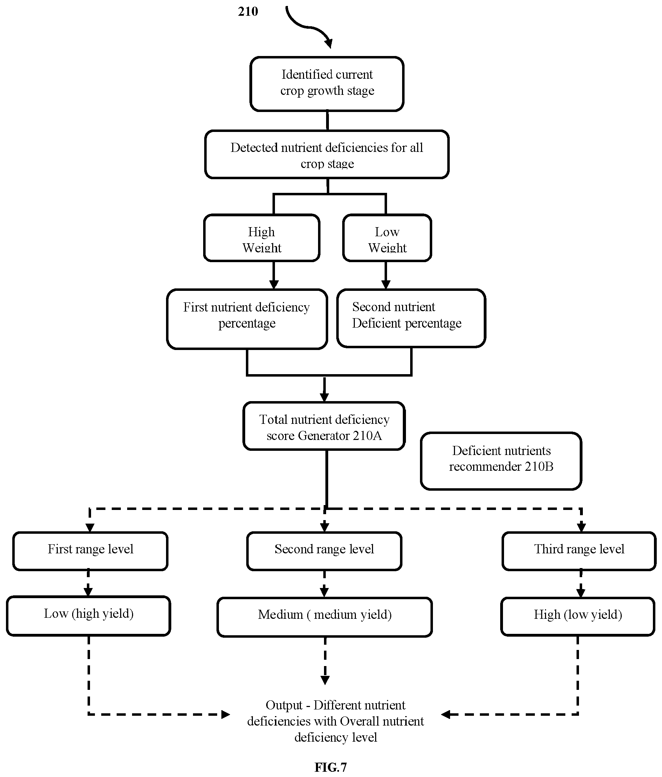

In an embodiment, the system 100 comprises one or more data storage devices or the memory 102 operatively coupled to the processor(s) 104 and is configured to store instructions for execution of steps of a method 300 by the processor(s) or one or more hardware processors 104. The steps of the method 300 of the present disclosure will now be explained with reference to the components or blocks of the system 100 as depicted in FIG.1 through FIG.2, and the steps of flow diagram as depicted in FIG.3A, FIG.3B and FIG.7. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring to the steps of the method 300, at step 302 a one or more hardware processor receive from an image capturing device a plurality of crop images of one or more crop fields and a crop age calculated from a planting day to a current day. For each crop the image capturing device captures a top view, a front view, a right side view and a left side view and each crop field includes two or more field crops;

Referring to the above example, the farmer utilizes the image capturing device to capture the plurality of crop images of one or more crop fields. For example, the crop soyabean is used for explanation. The image capturing device may include an IR camera, or an RGB camera and the like or combination of both. The image capturing device captures each crop in each view and captures every part of the crop. Crop age is the number of days from sowing or transplanting of the crop.

Plant nutrients play a vital role in plant growth and development. Plants require nutrients in small and large quantities for a complete life cycle. When nutrients are not available in sufficient quantities, plants show nutrient deficiency symptoms. It is noted that nutrient deficiencies affects plant growth and yield. Diagnosing nutritional deficiencies in plant based on image analysis during the cropping season.

Normally plant requires sixteen essential elements which is classified in two categories based on requirement by the crop such as 1. Micronutrients and 2. Macro nutrients.
1. Macronutrients includes Nitrogen (N), phosphorous (P), potassium (K), sulfur (S), calcium (Ca), and magnesium (Mg).
2. Micronutrients includes copper (Cu), iron (Fe), manganese (Mn), zinc (Zn), boron (B), chloride (Cl), and molybdenum (Mo).
These nutrients are essential to complete their life cycle. Balanced fertilizers are very important to get optimum production. In excess or lack of any nutrient plant shows deficiency or toxic symptoms.

Classification of the nutrient deficiency symptoms based on nutrient mobility in the plant is very difficult. Deficiency symptoms of highly mobile nutrient such as N, P, K, Mo, and Mg appear first in the lower part or old leaf of the plant. Deficiency symptoms of less mobile or immobile Nutrients such as Ca, B, S, Cu, Fe, Cl and Mn appears first in the upper leaf of the plant and deficiency symptoms of moderate mobile nutrients such as Zn appears in the middle leaf of plant.

Referring to the steps of the method 300, at step 304 the one or more hardware processors determine by a trained single shot deep learning network via the one or more hardware processors, a crop growth stage from a plurality of crop growth stages for each crop by extracting a plurality of morphological features associated with the crop, wherein the plurality of crop growth stages includes at least one of a vegetative stage, a flowering stage, and a maturity stage.

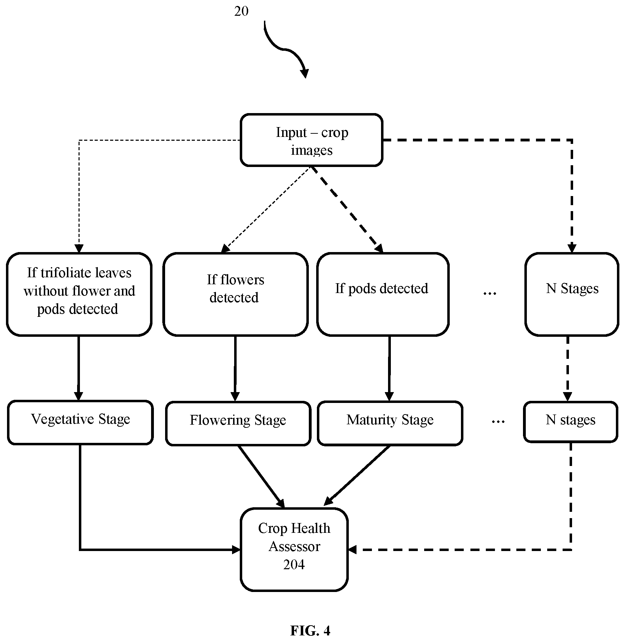

The plurality of crop images are provided as input to the trained single shot deep learning network to determine the current crop growth stage for each crop. Referring now to FIG.4, the crop growth stage identifier 202 identifies the crop plant growth stage based on the plurality of morphological features extracted from the crop. The plurality of morphological features may include a trifoliate leaves, a flower, pods, fruits, and the like. The plurality of crop growth stages are detected as the vegetative stage if the model detects trifoliate leaves without flower and pods. The flowering stage is detected if the model detects flowers and the maturity stage if model detects pods.

Referring to the steps of the method 300, at step 306 the one or more hardware processors compute a balanced plant nutrition index (BPNI) value to classify a health state of the crop into at least one of a healthy crop or an unhealthy crop based on healthy morphological features, the current crop growth stage of the crop and the plurality of morphological features.

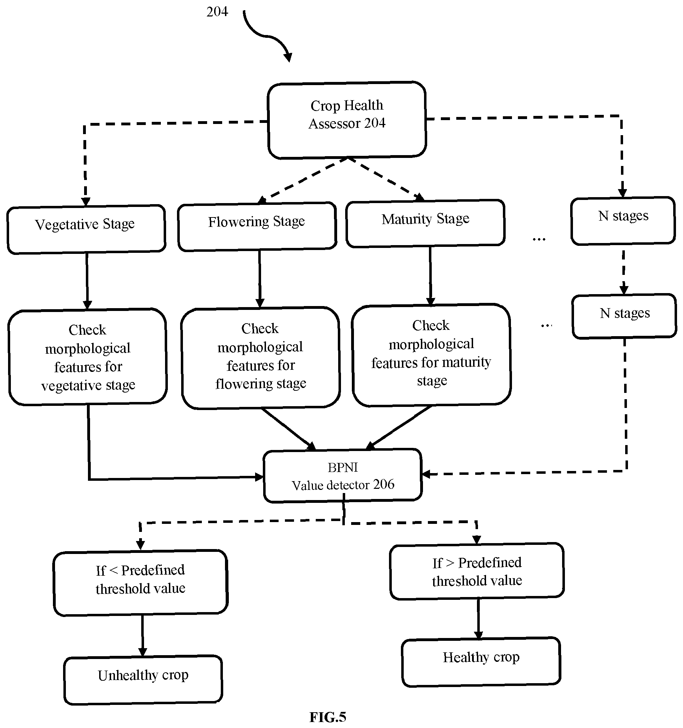

In one embodiment, the crop health assessor 204 (referring now to FIG.5) the crop health for each crop is determined by counting a number of flowers, a number of fruits, a number of branches, a number of nodes and an internode. The plant height, leaf length, a leaf breadth, a mean leaf area, a size of internode, a length of internode, a fruit length, a fruit width, a fruit thickness are measured by counting the pixel number. Further, the plurality of healthy morphological features are obtained for the current crop growth stage based on a reference dataset and determining if the average values of the current crop growth stage is above the reference dataset. The reference dataset (for example for soybean) for the vegetative state average plant height is 30 cm, leaf area for 15 days age is 0.47 dm², leaf area for 30 days age is 2.47 dm², etc. For flowering stage average plant height is 40 cm, leaf area for 45 days age is 4.28 dm²,Number of flowers are 12, etc. For maturity stage average plant height is 60 cm, leaf area for 75 days age is 2.93 dm², number of pods are 55, fruit length is 4.57 cm, fruit width is 5.45, fruit thickness is 1.11 cm, number of branches are 4, and the like.

It is noted that the crop growth stage is "N stages" and is not limited to the vegetative stage, the flowering stage, and the maturity stage.

In one embodiment, the BPNI value estimator 206 classifies the crop health state and is calculated as represented in Equation 1, $BPNI = \frac{\left(NIR-Red\right)}{\left(NIR+Red\right)} \times 0.5 + {\sum }_{i = 1}^{n} \frac{MChi}{MCti} \times 0.5$ Where, NIR is a near-infrared light, Red is a visible red light, MChi is a number of healthy morphological features, MCti is a total number of morphological features in particular crop growth stage. It is noted that the BPNI predefined threshold value ranges between -0.5 to 1. The health state of the crop is classified as healthy crop when the BPNI value is lesser than a predefined threshold value and the unhealthy crop when the BPNI value is lesser than the predefined threshold value.

Referring to the steps of the method 300, at step 308 the one or more hardware processors segmenting the unhealthy crop into a plurality of regions comprising a lower leaf, a middle leaf, an upper leaf, and a terminal bud region based on pixel length, and identifying at least one affected area associated with the plurality of regions, wherein the affected area includes at least one of a leaf discoloration, and a leaf having white stripes, dead spot, curling, burns, and stains.

Once the current crop growth stage (for example soyabean) is identified, different nutrient deficiencies will be detected respective to the current growth stage of the crop. The crop nutrient deficiency detector 208 fetches output from the BPNI value estimator 206. Initially, each captured crop image is segmented into the plurality of regions comprising the lower leaf, the middle leaf, the upper leaf, and the terminal bud region according to the pixel length of image. Each region will be of total pixel length of image divided by four. The trained single shot deep learning network embedded into the crop nutrient deficiency detector 208 detects the location of discolored leaves at various affected area in the crop image.

For example, in the soyabean if the upper leaf region is affected following deficiency symptoms includes such as (i) complete yellow leaf without dead spots are identified, (ii) purple leaf with dark green color, (iii) marginal yellow leaf with dead spots on margin. If the lower leaf region is affected following deficiency symptoms includes complete yellow leaf.

Referring to the steps of the method 300, at step 310 the one or more hardware processors identify a plurality of nutrient deficiencies corresponding to the current crop growth stage of the unhealthy crop based on the affected area associated with at least one region;

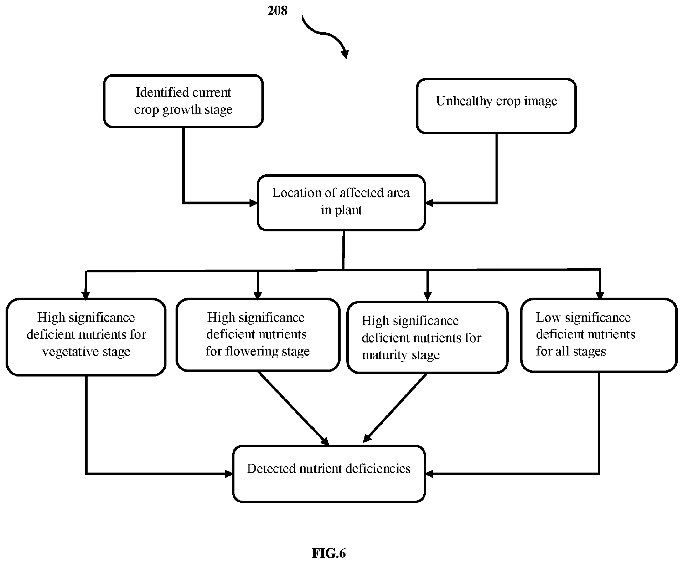

Referring now to FIG.6, the crop nutrient deficiency detector 208 locates at least one affected area associated with the plurality of regions of the unhealthy crop. As described above every nutrient deficiency symptom flags missing of nutrient in the crop which is essentially required. Various nutrients plays vital role in its functions, for example,
1. Nitrogen (N) plays a very important role in protein synthesis and plant growth. Its deficiency symptoms appear first on lower or old leaf of plant, leaf color changed in uniform yellowing with stunted plant growth.
2. Phosphorus (P) is essential for energy storage and transfer and responsible for proper plant root growth development. Phosphorus deficiency symptoms appear on lower/ old leaf and leaves turn purplish, dark green in color and causes stunted growth of plant.
3. Potassium is an enzyme activator and promotes metabolism activities and it's important to develop resistance against disease. Potassium deficiency symptoms appear on lower/ old leaf causing yellowing with necrotic spot from margin of leaf.
4. Magnesium (Mg) is an important component of chlorophyll and promotes plant enzymes activities. Magnesium deficiency symptoms seen on lower/old leaf causing interveinal yellowing and reduced the leaf size.
5. Calcium (ca) plays a major role in the creation and structural support of cell walls. Calcium is immobile in plants, so its deficiency symptoms appear on new or upper leaf of the plant. The younger leaves turn from tips with dead spot, crinkle, distortion of leaves.
6. Iron (Fe) plays role in synthesis of chlorophyll and various enzymes. Iron deficiency symptoms appear on younger leaves causing Interveinal yellowing with white color on leaves.
7. Manganese (Mn) is essential for photosynthesis and respiration. Manganese deficiency symptoms appear on younger leaves with Interveinal yellowing of leaves.
8. Zinc (Zn) is an important part of enzyme and plant growth regulator activators of the plant. Zinc deficiency symptoms appear on middle position of plant leaves with interveinal yellowing with bronzing and dead spot appears on leaves.
9. Chlorine (Cl) plays a major role in stomata regulation and leaf structure. Chlorine deficient plants show symptoms such as reduced leaf growth, burning from tip and margin with chlorosis.
10. Boron (B) is important for cell wall structure and division at growing tips of plant.
11. Copper (Cu) is involved in enzymes functioning and protein synthesis.
12. Sulphur (S) plays an important role in the creation of amino acids, protein, vitamins, and oil.
13. Molybdenum (Mo) plays a major role in nitrogen fixation in legume crops and enzymes activity.

In one embodiment, for unhealthy crop the high significance deficiency nutrients for the vegetative stage includes nitrogen, phosphorous, potassium and sulphur. In the lower leaf region nitrogen, phosphorous, potassium are detected, and sulphur is detected in the upper leaf region.

The nutrient deficiency is nitrogen (N) if complete yellow leaf without dead spots were detected in the lower leaf region. The nutrient deficiency classified as phosphorus (P) deficiency if purple leaf with dark green color is detected in lower leaf region for the lower leaf region. The nutrient deficiency classified as potassium (K) deficiency if marginal yellow leaf with dead spots on margin are detected in the lower leaf region. The nutrient deficiency is classified as sulphur (S) deficiency if complete yellow leaf is detected in upper leaf region.

Referring to the steps of the method 300, at step 312 the one or more hardware processors compute for the unhealthy crop based on the corresponding crop growth stage (i) a first nutrient deficient percentage for each deficiency having a high significance nutrients and (ii) a second nutrient deficient percentage of each deficient having a low significance nutrients.

Referring the above example soyabean and FIG.7 the crop nutrient deficiency level detector 210 obtains the plurality of nutrient deficiencies corresponding to the current crop growth of the unhealthy crop as input from the crop nutrient deficiency detector 208. Based on the plurality of nutrient deficiencies, the method computes the first nutrient deficient percentage having the high significance for each deficient nutrient and the first nutrient deficient percentage having the low significance for each deficient nutrient.

In one embodiment, for unhealthy crop the high significance deficiency nutrients for the flowering stage includes potassium, sulphur, copper, and boron. The nutrient deficiency is potassium (K) if marginal yellow leaf with dead spots on margin are detected in lower leaf region. The nutrient deficiency is sulphur (S) if complete yellow leaf is detected in upper leaf region. The nutrient deficiency is copper (Cu) if slight interveinal yellow leaf with whited tips are detected in upper leaf region. The nutrient deficiency is boron (B) if yellow leaf with upward curling and without dead spots are detected in terminal bud region.

In one embodiment, for unhealthy crop the high significance deficiency nutrients for the maturity stage includes nitrogen, phosphorous, potassium, boron, copper, magnesium, manganese, ferrous and zinc. The nutrient deficiency is nitrogen (N) if complete yellow leaf without dead spots is detected in lower leaf region. The nutrient deficiency is phosphorus (P) if purple leaf with dark green color is detected in lower leaf region. The nutrient deficiency is potassium (K) if marginal yellow leaf with dead spots on margin are detected in lower leaf region. The nutrient deficiency boron (B) if yellow leaf with upward curling and without dead spots are detected in terminal bud region. The nutrient deficiency is copper (Cu) if slight interveinal yellow with whited tips are detected in upper leaf region. The nutrient deficiency is magnesium (Mg) if interveinal yellow leaf is detected in lower leaf region. The nutrient deficiency is iron (Fe) if yellow leaf with interveinal white color is detected in upper leaf region. The nutrient deficiency is manganese (Mn) if interveinal yellow leaf is detected in upper leaf region. The nutrient deficiency is zinc (Zn) if yellow leaf with dead spots and brown to white stripes are detected in middle leaf region.

In one embodiment, for unhealthy crop the low significance deficiency nutrients for the all stages includes molybdenum, chlorine, and calcium, The nutrient deficiency is Molybdenum (Mo) if marginal yellow leaf with dead spots between veins are detected in lower leaf region. The nutrient deficiency is Chlorine (Cl) if yellow leaf with dark green vein and leaf burning from tip and margin is detected in upper leaf region. The nutrient deficiency is Calcium (ca) if yellow leaf with upward curling and dead spot and distortion is detected in terminal buds.

Referring to the steps of the method 300, at step 314 the one or more hardware processors compute for the unhealthy crop a first nutrient deficiency score and a second nutrient deficiency score, wherein the first deficiency score is a product of average of nutrient deficient percentage of all high significance nutrients and a high weight, wherein the second deficiency score is the product of average of nutrient deficient percentage of all low important nutrients and a low weight;

The total nutrient deficiency score generator 210a generates the first nutrient deficiency score based on the high significance nutrients and the second nutrient deficiency score for the unhealthy crop based on the low significance nutrients.

The high weight is assigned to nutrient deficiencies detected in at least one current crop growth stage. The high weight being 0.7 and the low weight being 0.3 for all the plurality of crop growth stages.

Referring to the steps of the method 300, at step 316 the one or more hardware processors compute a total nutrient deficiency score by averaging a sum of the first nutrient deficiency score, the second nutrient deficiency score, and the BPNI, and recommending the deficient nutrients for the unhealthy crop when the total nutrient deficiency score is at least within a range level as represented in Equation 2, $\begin{matrix}Total nutrient deficiency score = \left\{\left[\left({AP}_{a 1}∗HW\right)+\left({AP}_{a 2}∗LW\right)\right]x0.5\right\} + \\ \left\{\left(1-BPNI\right)∗0.5∗100\right\}\end{matrix}$ Where,
*AP*_{*a*1} is an average of affected percentage of all detected high weighted deficient nutrients for the corresponding crop growth stage,
*AP*_{*a*2} is average of affected percentage of all detected low weighted deficient nutrients for the corresponding crop growth stage.

Further, deficient nutrients recommender 210b recommends the deficient nutrients for the crop based on the corresponding crop growth stage. The deficient nutrients recommender 210b categorizes the deficient nutrients based on a range level. The range level includes a first range level, a second range level and a third range level. The first range level is 30%, the second range level is between 30%-70%, and the third range level is above 70%.

The total nutrient deficiency score is within the first range level. The method yields output with name of nutrient deficiencies with overall low crop nutrient deficiency level providing high yield.

If the total nutrient deficiency score is within the second range level the method yields output with name of nutrient deficiencies with overall medium crop nutrient deficiency level providing medium yield.

If the total nutrient deficiency score is within the second range level the method yields output with name of nutrient deficiencies with overall high crop nutrient deficiency level providing low yield.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of nutrient deficiency detection based on current crop growth stage. The embodiment, thus provides system and method to determine crop growth stage nutrient deficiencies. Moreover, the embodiments herein further provides correct nutrient deficiencies in the crop providing a diagnosing plan in the plant based on plant image analysis during the cropping season. The method also provides overall crop nutrient deficiency level such as micronutrient and macro nutrient.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method to determine crop growth stage nutrient deficiencies, the method comprising:
receiving (302) from an image capturing device controlled by one or more hardware processor, a plurality of crop images of one or more crop fields and a crop age calculated from a planting day to a current day, wherein for each crop the image capturing device captures a top view, a front view, a right side view and a left side view and each crop field includes two or more field crops;
determining (304) by a trained single shot deep learning network executed by the one or more hardware processors, a current crop growth stage from a plurality of crop growth stages for each crop by extracting a plurality of morphological features associated with the crop, wherein the plurality of crop growth stages comprise at least one of a vegetative stage, a flowering stage, and a maturity stage;
computing (306) via the one or more hardware processors, a balanced plant nutrition index (BPNI) value to classify a health state of the crop into one of a healthy crop or an unhealthy crop based on healthy morphological features, the crop growth stage of the crop and the plurality of morphological features;
segmenting (308) via the one or more hardware processors, the unhealthy crop into a plurality of regions comprising a lower leaf, a middle leaf, an upper leaf, and a terminal bud region based on pixel length, and identifying at least one affected area associated with the plurality of regions, wherein the affected area includes at least one of a leaf discoloration, and a leaf having white stripes, dead spot, curling, burns, and stains;
identifying (310) via the one or more hardware processors a plurality of nutrient deficiencies corresponding to the current crop growth stage of the unhealthy crop based on the affected area associated with at least one region;
computing (312) for the unhealthy crop via the one or more hardware processors based on the corresponding crop growth stage (i) a first nutrient deficient percentage for each deficiency having a high significance nutrients and (ii) a second nutrient deficient percentage of each deficient having a low significance nutrients;
computing (314) for the unhealthy crop via the one or more hardware processors, a first nutrient deficiency score and a second nutrient deficiency score, wherein the first deficiency score is a product of average of nutrient deficient percentage of all high significance nutrients and a high weight, wherein the second deficiency score is the product of average of nutrient deficient percentage of all low important nutrients and a low weight; and
computing (316) via the one or more hardware processors, a total nutrient deficiency score for deficient nutrients of the unhealthy crop by averaging a sum of the first nutrient deficiency score, the second nutrient deficiency score, and the BPNI, and recommending the deficient nutrients for the unhealthy crop when the total nutrient deficiency score is at least within a range level.

2. The processor implemented method of claim 1, wherein the crop growth stage of the crop is classified into one of (i) the vegetative stage when trifoliate leaves without flower and pods are detected (ii) the flowering stage when flowers are detected and (iii) the maturity stage when pods are detected.

3. The processor implemented method of claim 1, wherein the crop health of each crop is determined by,
counting a number of flowers, a number of fruits, a number of branches, a number of nodes, and an internode, and measuring the plant height, leaf length, a leaf breadth, a mean leaf area, a size of internode, a length of internode, fruit length, fruit width, fruit thickness by counting the pixel number; and
determining the healthy morphological features of the crop for the corresponding crop growth stage if the plurality of morphological features are above a reference dataset.

4. The processor implemented method of claim 3, wherein the reference dataset comprises at least one of a plant height, a leaf length, a leaf breadth, a mean leaf area, a size of internode, a length of internode, fruit length, fruit width, fruit thickness a color of leaf, a numbers of node, a numbers of internode a number of plant leaf, a number of branches, a number of flowers, a fruit, and a number of tillers.

5. The processor implemented method of claim 1, wherein the health state of the crop is classified as healthy crop when the BPNI value is lesser than a predefined threshold value, and unhealthy crop when the BPNI value is equal to or greater than the predefined threshold value.

6. The processor implemented method of claim 1, recommending the nutrients deficient for the unhealthy crop,
wherein a low crop nutrient deficiency level with corresponding deficient nutrients are recommended when the total nutrient deficiency score is within a first range level,
wherein a medium crop nutrient deficiency level with corresponding deficient nutrients are recommended when the total nutrient deficiency score is within a second range level, and
wherein a high crop nutrient deficiency level with corresponding deficient nutrients are recommended when the total nutrient deficiency score is within a third range level.

7. A system (100) to determine crop growth stage nutrient deficiencies comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive from an image capturing device a plurality of crop images of one or more crop fields and a crop age calculated from a planting day to a current day, wherein for each crop the image capturing device captures a top view, a front view, a right side view and a left side view and each crop field includes two or more field crops;
determine by a trained single shot deep learning network a crop growth stage from a plurality of crop growth stages for each crop by extracting a plurality of morphological features associated with the crop, wherein the plurality of crop growth stages comprise at least one of a vegetative stage, a flowering stage, and a maturity stage;
compute a balanced plant nutrition index (BPNI) value to classify a health state of the crop into one of a healthy crop or an unhealthy crop based on healthy morphological features, the crop growth stage of the crop and the plurality of morphological features;
segment the unhealthy crop into a plurality of regions comprising a lower leaf, a middle leaf, an upper leaf, and a terminal bud region based on pixel length, and identifying at least one affected area associated with the plurality of regions, wherein the affected area includes at least one of a leaf discoloration, and a leaf having white stripes, dead spot, curling, burns, and stains;
identify a plurality of nutrient deficiencies corresponding to the current crop growth stage of the unhealthy crop based on the affected area associated with at least one region;
compute for the unhealthy crop based on the corresponding crop growth stage (i) a first nutrient deficient percentage for each deficiency having a high significance nutrients and (ii) a second nutrient deficient percentage of each deficient having a low significance nutrients;
compute for the unhealthy crop a first nutrient deficiency score and a second nutrient deficiency score, wherein the first deficiency score is a product of average of nutrient deficient percentage of all high significance nutrients and a high weight, wherein the second deficiency score is the product of average of nutrient deficient percentage of all low important nutrients and a low weight; and
compute a total nutrient deficiency score for deficient nutrients of the unhealthy crop by averaging a sum of the first nutrient deficiency score, the second nutrient deficiency score, and the BPNI, and recommending the deficient nutrients for the unhealthy crop when the total nutrient deficiency score is at least within a range level.

8. The system of claim 7, wherein the crop growth stage of the crop is classified into one of (i) the vegetative stage when trifoliate leaves without flower and pods are detected (ii) the flowering stage when flowers are detected and (iii) the maturity stage when pods are detected.

9. The system of claim 7, wherein the crop health of each crop is determined by,
counting a number of flowers, a number of fruits, a number of branches, a number of nodes, and an internode, and measuring the plant height, leaf length, a leaf breadth, a mean leaf area, a size of internode, a length of internode, fruit length, fruit width, fruit thickness by counting the pixel number; and
determining the healthy morphological features of the crop for the corresponding crop growth stage if the plurality of morphological features are above a reference dataset.

10. The system of claim 9, wherein the reference dataset comprises at least one of a plant height, a leaf length, a leaf breadth, a mean leaf area, a size of internode, a length of internode, fruit length, fruit width, fruit thickness, a numbers of node, a numbers of internode, a number of plant leaf, a number of branches, a number of flowers, fruit, and a number of tillers.

11. The system of claim 7, wherein the health state of the crop is classified as healthy crop when the BPNI value is lesser than a predefined threshold value, and unhealthy crop when the BPNI value is equal to or greater than the predefined threshold value.

12. The system of claim 7, recommending the nutrients deficient for the unhealthy crop,
wherein a low crop nutrient deficiency level with corresponding deficient nutrients are recommended when the total nutrient deficiency score is within a first range level,
wherein a medium crop nutrient deficiency level with corresponding deficient nutrients are recommended when the total nutrient deficiency score is within a second range level, and
wherein a high crop nutrient deficiency level with corresponding deficient nutrients are recommended when the total nutrient deficiency score is within a third range level.

13. One or more non-transitory machine-readable information storage mediums comprising one or more instructions which when executed by one or more hardware processors cause:
receiving from an image capturing device a plurality of crop images of one or more crop fields and a crop age calculated from a planting day to a current day, wherein for each crop the image capturing device captures a top view, a front view, a right side view and a left side view and each crop field includes two or more field crops;
determining by a trained single shot deep learning network a current crop growth stage from a plurality of crop growth stages for each crop by extracting a plurality of morphological features associated with the crop, wherein the plurality of crop growth stages comprise at least one of a vegetative stage, a flowering stage, and a maturity stage;
computing a balanced plant nutrition index (BPNI) value to classify a health state of the crop into one of a healthy crop or an unhealthy crop based on healthy morphological features, the crop growth stage of the crop and the plurality of morphological features;
segmenting the unhealthy crop into a plurality of regions comprising a lower leaf, a middle leaf, an upper leaf, and a terminal bud region based on pixel length, and identifying at least one affected area associated with the plurality of regions, wherein the affected area includes at least one of a leaf discoloration, and a leaf having white stripes, dead spot, curling, burns, and stains;
identifying a plurality of nutrient deficiencies corresponding to the current crop growth stage of the unhealthy crop based on the affected area associated with at least one region;
computing for the unhealthy crop based on the corresponding crop growth stage (i) a first nutrient deficient percentage for each deficiency having a high significance nutrients and (ii) a second nutrient deficient percentage of each deficient having a low significance nutrients;
computing for the unhealthy crop a first nutrient deficiency score and a second nutrient deficiency score, wherein the first deficiency score is a product of average of nutrient deficient percentage of all high significance nutrients and a high weight, wherein the second deficiency score is the product of average of nutrient deficient percentage of all low important nutrients and a low weight; and
computing a total nutrient deficiency score for deficient nutrients of the unhealthy crop by averaging a sum of the first nutrient deficiency score, the second nutrient deficiency score, and the BPNI, and recommending the deficient nutrients for the unhealthy crop when the total nutrient deficiency score is at least within a range level.

14. The one or more non-transitory machine-readable information storage mediums of claim 13, wherein the crop growth stage of the crop is classified into one of (i) the vegetative stage when trifoliate leaves without flower and pods are detected (ii) the flowering stage when flowers are detected and (iii) the maturity stage when pods are detected.

15. The one or more non-transitory machine-readable information storage mediums of claim 13, wherein the crop health of each crop is determined by,
counting a number of flowers, a number of fruits, a number of branches, a number of nodes, and an internode, and measuring the plant height, leaf length, a leaf breadth, a mean leaf area, a size of internode, a length of internode, fruit length, fruit width, fruit thickness by counting the pixel number; and
determining the healthy morphological features of the crop for the corresponding crop growth stage if the plurality of morphological features are above a reference dataset.

## Patentansprüche

1. Prozessorimplementiertes Verfahren zum Bestimmen von Nährstoffmangelzuständen im Kulturpflanzenwachstumsstadium, wobei das Verfahren Folgendes umfasst:
Empfangen (302), von einer Bildaufnahmevorrichtung, die durch einen oder mehrere Hardwareprozessoren gesteuert wird, einer Mehrzahl von Kulturpflanzenbildern von einem oder mehreren Kulturpflanzenfeldern und eines Kulturpflanzenalters, das von einem Pflanztag bis zu einem aktuellen Tag berechnet wird, wobei die Bildaufnahmevorrichtung für jedes Kulturpflanzenfeld eine Draufsicht, eine Vorderansicht, eine rechte Seitenansicht und eine linke Seitenansicht aufnimmt und jedes Kulturpflanzenfeld zwei oder mehr Feldkulturpflanzenfelder enthält;
Bestimmen (304), durch ein trainiertes Einzelschuss-Deep-Learning-Netzwerk, das durch den einen oder die mehreren Hardwareprozessoren ausgeführt wird, eines aktuellen Kulturpflanzenwachstumsstadiums aus einer Mehrzahl von Kulturpflanzenwachstumsstadien für jedes Kulturpflanzenfeld durch Extrahieren einer Mehrzahl von morphologischen Merkmalen, die mit dem Kulturpflanzenfeld assoziiert sind, wobei die Mehrzahl von Kulturpflanzenwachstumsstadien mindestens eines von einem vegetativen Stadium, einem blühenden Stadium und einem Reifestadium umfasst;
Berechnen (306), über den einen oder die mehreren Hardwareprozessoren, eines Wertes des ausgewogenen Pflanzennährstoffindex (BPNI), um einen Gesundheitszustand des Kulturpflanzenfelds in eines von einem gesunden Kulturpflanzenfeld oder einem ungesunden Kulturpflanzenfeld auf der Grundlage von gesunden morphologischen Merkmalen, dem Kulturpflanzenwachstumsstadium des Kulturpflanzenfelds und der Mehrzahl von morphologischen Merkmalen zu klassifizieren;
Segmentieren (308), über den einen oder die mehreren Hardwareprozessoren, des ungesunden Kulturpflanzenfelds in eine Mehrzahl von Regionen, die ein unteres Blatt, ein mittleres Blatt, ein oberes Blatt und eine endständige Knospenregion umfassen, auf der Grundlage der Pixellänge und Identifizieren mindestens eines betroffenen Bereichs, der mit der Mehrzahl von Regionen assoziiert ist, wobei der betroffene Bereich mindestens eines von einer Blattverfärbung und einem Blatt mit weißen Streifen, toten Flecken, Kräuselungen, Verbrennungen und Flecken enthält;
Identifizieren (310), über den einen oder die mehreren Hardwareprozessoren, einer Mehrzahl von Nährstoffmangelzuständen, die dem aktuellen Kulturpflanzenwachstumsstadium des ungesunden Kulturpflanzenfelds entsprechen, auf der Grundlage des betroffenen Bereichs, der mit mindestens einer Region assoziiert ist;
Berechnen (312), für das ungesunde Kulturpflanzenfeld, über den einen oder die mehreren Hardwareprozessoren, auf der Grundlage des entsprechenden Kulturpflanzenwachstumsstadiums, (i) eines ersten nährstoffarmen Prozentsatzes für jeden Mangelzustand, der Nährstoffe mit hoher Signifikanz aufweist, und (ii) eines zweiten nährstoffarmen Prozentsatzes für jeden Mangelzustand, der Nährstoffe mit geringer Signifikanz aufweist;
Berechnen (314), für das ungesunde Kulturpflanzenfeld, über den einen oder die mehreren Hardwareprozessoren, eines ersten Nährstoffmangelwerts und eines zweiten Nährstoffmangelwerts, wobei der erste Mangelwert ein Produkt des Durchschnitts des nährstoffarmen Prozentsatzes aller Nährstoffe mit hoher Signifikanz und eines hohen Gewichts ist, wobei der zweite Mangelwert das Produkt des Durchschnitts des nährstoffarmen Prozentsatzes aller Nährstoffe mit geringer Signifikanz und eines niedrigen Gewichts ist; und
Berechnen (316), über den einen oder die mehreren Hardwareprozessoren, eines Gesamtnährstoffmangelwerts für mangelhafte Nährstoffe des ungesunden Kulturpflanzenfelds durch Mitteln einer Summe des ersten Nährstoffmangelwerts, des zweiten Nährstoffmangelwerts und des BPNI und Empfehlen der mangelhaften Nährstoffe für das ungesunde Kulturpflanzenfeld, wenn der Gesamtnährstoffmangelwert mindestens innerhalb eines Bereichsniveaus liegt.

2. Prozessorimplementiertes Verfahren nach Anspruch 1, wobei das Kulturpflanzenwachstumsstadium des Kulturpflanzenfelds in eines von (i) dem vegetativen Stadium, wenn Trifoliatblätter ohne Blüten und Kapseln detektiert werden, (ii) dem Blütestadium, wenn Blüten detektiert werden, und (iii) dem Reifestadium, wenn Kapseln detektiert werden, klassifiziert wird.

3. Prozessorimplementiertes Verfahren nach Anspruch 1, wobei die Kulturpflanzengesundheit jedes Kulturpflanzenfelds bestimmt wird durch
Zählen einer Anzahl von Blüten, einer Anzahl von Früchten, einer Anzahl von Zweigen, einer Anzahl von Knoten und eines Zwischenknotens und Messen der Pflanzenhöhe, der Blattlänge, einer Blattbreite, einer mittleren Blattfläche, einer Größe des Zwischenknotens, einer Länge des Zwischenknotens, der Fruchtlänge, der Fruchtbreite, der Fruchtdicke durch Zählen der Pixelanzahl; und
Bestimmen der gesunden morphologischen Merkmale des Kulturpflanzenfelds für das entsprechende Kulturpflanzenwachstumsstadium, wenn die Mehrzahl von morphologischen Merkmalen über einem Referenzdatensatz liegt.

4. Prozessorimplementiertes Verfahren nach Anspruch 3, wobei der Referenzdatensatz mindestens eines von einer Pflanzenhöhe, einer Blattlänge, einer Blattbreite, einer mittleren Blattfläche, einer Größe des Zwischenknotens, einer Länge des Zwischenknotens, einer Fruchtlänge, einer Fruchtbreite, einer Fruchtdicke, einer Farbe des Blatts, einer Anzahl von Knoten, einer Anzahl von Zwischenknoten, einer Anzahl von Pflanzenblättern, einer Anzahl von Zweigen, einer Anzahl von Blüten, einer Frucht und einer Anzahl von Schalen umfasst.

5. Prozessorimplementiertes Verfahren nach Anspruch 1, wobei der Gesundheitszustand des Kulturpflanzenfelds als gesundes Kulturpflanzenfeld klassifiziert wird, wenn der BPNI-Wert kleiner als ein vordefinierter Schwellenwert ist, und als ungesundes Kulturpflanzenfeld klassifiziert wird, wenn der BPNI-Wert gleich oder größer als der vordefinierte Schwellenwert ist.

6. Prozessorimplementiertes Verfahren nach Anspruch 1, das den Nährstoffmangel für das ungesunde Kulturpflanzenfeld empfiehlt,
wobei ein niedriges Kulturpflanzennährstoffmangelniveau mit entsprechenden mangelhaften Nährstoffen empfohlen wird, wenn der Gesamtnährstoffmangelwert innerhalb eines ersten Bereichsniveaus liegt,
wobei ein mittleres Kulturpflanzennährstoffmangelniveau mit entsprechenden mangelhaften Nährstoffen empfohlen wird, wenn der Gesamtnährstoffmangelwert innerhalb eines zweiten Bereichsniveaus liegt, und
wobei ein hohes Kulturpflanzennährstoffmangelniveau mit entsprechenden mangelhaften Nährstoffen empfohlen wird, wenn der Gesamtnährstoffmangelwert innerhalb eines dritten Bereichsniveaus liegt.

7. System (100) zum Bestimmen von Nährstoffmangelzuständen im Kulturpflanzenwachstumsstadium, das Folgendes umfasst:
einen Speicher (102), der Anweisungen speichert;
eine oder mehrere Kommunikationsschnittstellen (106); und
einen oder mehrere Hardwareprozessoren (104), die über die eine oder die mehreren Kommunikationsschnittstellen (106) mit dem Speicher (102) gekoppelt sind, wobei der eine oder die mehreren Hardwareprozessoren (104) durch die Anweisungen konfiguriert sind zum:
Empfangen, von einer Bildaufnahmevorrichtung, einer Mehrzahl von Kulturpflanzenbildern von einem oder mehreren Kulturpflanzenfeldern und eines Kulturpflanzenalters, das von einem Pflanztag bis zu einem aktuellen Tag berechnet wird, wobei die Bildaufnahmevorrichtung für jedes Kulturpflanzenfeld eine Draufsicht, eine Vorderansicht, eine rechte Seitenansicht und eine linke Seitenansicht aufnimmt und jedes Kulturpflanzenfeld zwei oder mehr Feldkulturpflanzenfelder enthält;
Bestimmen, durch ein trainiertes Einzelschuss-Deep-Learning-Netzwerk, eines Kulturpflanzenwachstumsstadiums aus einer Mehrzahl von Kulturpflanzenwachstumsstadien für jedes Kulturpflanzenfeld durch Extrahieren einer Mehrzahl von morphologischen Merkmalen, die mit dem Kulturpflanzenfeld assoziiert sind, wobei die Mehrzahl von Kulturpflanzenwachstumsstadien mindestens eines von einem vegetativen Stadium, einem blühenden Stadium und einem Reifestadium umfasst;
Berechnen eines Wertes des ausgewogenen Pflanzennährstoffindex (BPNI), um einen Gesundheitszustand des Kulturpflanzenfelds in eines von einem gesunden Kulturpflanzenfeld oder einem ungesunden Kulturpflanzenfeld auf der Grundlage von gesunden morphologischen Merkmalen, dem Kulturpflanzenwachstumsstadium des Kulturpflanzenfelds und der Mehrzahl von morphologischen Merkmalen zu klassifizieren;
Segmentieren des ungesunden Kulturpflanzenfelds in eine Mehrzahl von Regionen, die ein unteres Blatt, ein mittleres Blatt, ein oberes Blatt und eine endständige Knospenregion umfassen, auf der Grundlage der Pixellänge und Identifizieren mindestens eines betroffenen Bereichs, der mit der Mehrzahl von Regionen assoziiert ist, wobei der betroffene Bereich mindestens eines von einer Blattverfärbung und einem Blatt mit weißen Streifen, toten Flecken, Kräuselungen, Verbrennungen und Flecken enthält;
Identifizieren einer Mehrzahl von Nährstoffmangelzuständen, die dem aktuellen Kulturpflanzenwachstumsstadium des ungesunden Kulturpflanzenfelds entsprechen, auf der Grundlage des betroffenen Bereichs, der mit mindestens einer Region assoziiert ist;
Berechnen, für das ungesunde Kulturpflanzenfeld, auf der Grundlage des entsprechenden Kulturpflanzenwachstumsstadiums, (i) eines ersten nährstoffarmen Prozentsatzes für jeden Mangelzustand, der Nährstoffe mit hoher Signifikanz aufweist, und (ii) eines zweiten nährstoffarmen Prozentsatzes für jeden Mangelzustand, der Nährstoffe mit geringer Signifikanz aufweist;
Berechnen, für das ungesunde Kulturpflanzenfeld, eines ersten Nährstoffmangelwerts und eines zweiten Nährstoffmangelwerts, wobei der erste Mangelwert ein Produkt des Durchschnitts des nährstoffarmen Prozentsatzes aller Nährstoffe mit hoher Signifikanz und eines hohen Gewichts ist, wobei der zweite Mangelwert das Produkt des Durchschnitts des nährstoffarmen Prozentsatzes aller Nährstoffe mit geringer Signifikanz und eines niedrigen Gewichts ist; und
Berechnen eines Gesamtnährstoffmangelwerts für mangelhafte Nährstoffe des ungesunden Kulturpflanzenfelds durch Mitteln einer Summe des ersten Nährstoffmangelwerts, des zweiten Nährstoffmangelwerts und des BPNI und Empfehlen der mangelhaften Nährstoffe für das ungesunde Kulturpflanzenfeld, wenn der Gesamtnährstoffmangelwert mindestens innerhalb eines Bereichsniveaus liegt.

8. System nach Anspruch 7, wobei das Kulturpflanzenwachstumsstadium des Kulturpflanzenfelds in eines von (i) dem vegetativen Stadium, wenn Trifoliatblätter ohne Blüten und Kapseln detektiert werden, (ii) dem Blütestadium, wenn Blüten detektiert werden, und (iii) dem Reifestadium, wenn Kapseln detektiert werden, klassifiziert wird.

9. System nach Anspruch 7, wobei die Kulturpflanzengesundheit jedes Kulturpflanzenfelds bestimmt wird durch
Zählen einer Anzahl von Blüten, einer Anzahl von Früchten, einer Anzahl von Zweigen, einer Anzahl von Knoten und eines Zwischenknotens und Messen der Pflanzenhöhe, der Blattlänge, einer Blattbreite, einer mittleren Blattfläche, einer Größe des Zwischenknotens, einer Länge des Zwischenknotens, der Fruchtlänge, der Fruchtbreite, der Fruchtdicke durch Zählen der Pixelanzahl; und
Bestimmen der gesunden morphologischen Merkmale des Kulturpflanzenfelds für das entsprechende Kulturpflanzenwachstumsstadium, wenn die Mehrzahl von morphologischen Merkmalen über einem Referenzdatensatz liegt.

10. System nach Anspruch 9, wobei der Referenzdatensatz mindestens eines von einer Pflanzenhöhe, einer Blattlänge, einer Blattbreite, einer mittleren Blattfläche, einer Größe des Zwischenknotens, einer Länge des Zwischenknotens, einer Fruchtlänge, einer Fruchtbreite, einer Fruchtdicke, einer Anzahl von Knoten, einer Anzahl von Zwischenknoten, einer Anzahl von Pflanzenblättern, einer Anzahl von Zweigen, einer Anzahl von Blüten, einer Frucht und einer Anzahl von Schalen umfasst.

11. System nach Anspruch 7, wobei der Gesundheitszustand des Kulturpflanzenfelds als gesundes Kulturpflanzenfeld klassifiziert wird, wenn der BPNI-Wert kleiner als ein vordefinierter Schwellenwert ist, und als ungesundes Kulturpflanzenfeld klassifiziert wird, wenn der BPNI-Wert gleich oder größer als der vordefinierte Schwellenwert ist.

12. System nach Anspruch 7, das den Nährstoffmangel für das ungesunde Kulturpflanzenfeld empfiehlt,
wobei ein niedriges Kulturpflanzennährstoffmangelniveau mit entsprechenden mangelhaften Nährstoffen empfohlen wird, wenn der Gesamtnährstoffmangelwert innerhalb eines ersten Bereichsniveaus liegt,
wobei ein mittleres Kulturpflanzennährstoffmangelniveau mit entsprechenden mangelhaften Nährstoffen empfohlen wird, wenn der Gesamtnährstoffmangelwert innerhalb eines zweiten Bereichsniveaus liegt, und
wobei ein hohes Kulturpflanzennährstoffmangelniveau mit entsprechenden mangelhaften Nährstoffen empfohlen wird, wenn der Gesamtnährstoffmangelwert innerhalb eines dritten Bereichsniveaus liegt.

13. Ein oder mehrere nichtflüchtige maschinenlesbare Informationsspeichermedien, die eine oder mehrere Anweisungen umfassen, die, wenn sie durch einen oder mehrere Hardwareprozessoren ausgeführt werden, bewirken:
Empfangen, von einer Bildaufnahmevorrichtung, einer Mehrzahl von Kulturpflanzenbildern von einem oder mehreren Kulturpflanzenfeldern und eines Kulturpflanzenalters, das von einem Pflanztag bis zu einem aktuellen Tag berechnet wird, wobei die Bildaufnahmevorrichtung für jedes Kulturpflanzenfeld eine Draufsicht, eine Vorderansicht, eine rechte Seitenansicht und eine linke Seitenansicht aufnimmt und jedes Kulturpflanzenfeld zwei oder mehr Feldkulturpflanzenfelder enthält;
Bestimmen, durch ein trainiertes Einzelschuss-Deep-Learning-Netzwerk, eines aktuellen Kulturpflanzenwachstumsstadiums aus einer Mehrzahl von Kulturpflanzenwachstumsstadien für jedes Kulturpflanzenfeld durch Extrahieren einer Mehrzahl von morphologischen Merkmalen, die mit dem Kulturpflanzenfeld assoziiert sind, wobei die Mehrzahl von Kulturpflanzenwachstumsstadien mindestens eines von einem vegetativen Stadium, einem blühenden Stadium und einem Reifestadium umfasst;
Berechnen eines Wertes des ausgewogenen Pflanzennährstoffindex (BPNI), um einen Gesundheitszustand des Kulturpflanzenfelds in eines von einem gesunden Kulturpflanzenfeld oder einem ungesunden Kulturpflanzenfeld auf der Grundlage von gesunden morphologischen Merkmalen, dem Kulturpflanzenwachstumsstadium des Kulturpflanzenfelds und der Mehrzahl von morphologischen Merkmalen zu klassifizieren;
Segmentieren des ungesunden Kulturpflanzenfelds in eine Mehrzahl von Regionen, die ein unteres Blatt, ein mittleres Blatt, ein oberes Blatt und eine endständige Knospenregion umfassen, auf der Grundlage der Pixellänge und Identifizieren mindestens eines betroffenen Bereichs, der mit der Mehrzahl von Regionen assoziiert ist, wobei der betroffene Bereich mindestens eines von einer Blattverfärbung und einem Blatt mit weißen Streifen, toten Flecken, Kräuselungen, Verbrennungen und Flecken enthält;
Identifizieren einer Mehrzahl von Nährstoffmangelzuständen, die dem aktuellen Kulturpflanzenwachstumsstadium des ungesunden Kulturpflanzenfelds entsprechen, auf der Grundlage des betroffenen Bereichs, der mit mindestens einer Region assoziiert ist;
Berechnen, für das ungesunde Kulturpflanzenfeld, auf der Grundlage des entsprechenden Kulturpflanzenwachstumsstadiums, (i) eines ersten nährstoffarmen Prozentsatzes für jeden Mangelzustand, der Nährstoffe mit hoher Signifikanz aufweist, und (ii) eines zweiten nährstoffarmen Prozentsatzes für jeden Mangelzustand, der Nährstoffe mit geringer Signifikanz aufweist;
Berechnen, für das ungesunde Kulturpflanzenfeld, eines ersten Nährstoffmangelwerts und eines zweiten Nährstoffmangelwerts, wobei der erste Mangelwert ein Produkt des Durchschnitts des nährstoffarmen Prozentsatzes aller Nährstoffe mit hoher Signifikanz und eines hohen Gewichts ist, wobei der zweite Mangelwert das Produkt des Durchschnitts des nährstoffarmen Prozentsatzes aller Nährstoffe mit geringer Signifikanz und eines niedrigen Gewichts ist; und
Berechnen eines Gesamtnährstoffmangelwerts für mangelhafte Nährstoffe des ungesunden Kulturpflanzenfelds durch Mitteln einer Summe des ersten Nährstoffmangelwerts, des zweiten Nährstoffmangelwerts und des BPNI und Empfehlen der mangelhaften Nährstoffe für das ungesunde Kulturpflanzenfeld, wenn der Gesamtnährstoffmangelwert mindestens innerhalb eines Bereichsniveaus liegt.

14. Ein oder mehrere nichtflüchtige maschinenlesbare Informationsspeichermedien nach Anspruch 13, wobei das Kulturpflanzenwachstumsstadium des Kulturpflanzenfelds in eines von (i) dem vegetativen Stadium, wenn Trifoliatblätter ohne Blüten und Kapseln detektiert werden, (ii) dem Blütestadium, wenn Blüten detektiert werden, und (iii) dem Reifestadium, wenn Kapseln detektiert werden, klassifiziert wird.

15. Ein oder mehrere nichtflüchtige maschinenlesbare Informationsspeichermedien nach Anspruch 13, wobei die Kulturpflanzengesundheit jedes Kulturpflanzenfelds bestimmt wird durch
Zählen einer Anzahl von Blüten, einer Anzahl von Früchten, einer Anzahl von Zweigen, einer Anzahl von Knoten und eines Zwischenknotens und Messen der Pflanzenhöhe, der Blattlänge, einer Blattbreite, einer mittleren Blattfläche, einer Größe des Zwischenknotens, einer Länge des Zwischenknotens, der Fruchtlänge, der Fruchtbreite, der Fruchtdicke durch Zählen der Pixelanzahl; und
Bestimmen der gesunden morphologischen Merkmale des Kulturpflanzenfelds für das entsprechende Kulturpflanzenwachstumsstadium, wenn die Mehrzahl von morphologischen Merkmalen über einem Referenzdatensatz liegt.

## Revendications

1. Procédé mis en œuvre par processeur pour déterminer des carences en nutriments au stade de croissance de culture, le procédé comprenant :
la réception (302), en provenance d'un dispositif de capture d'images commandé par un ou plusieurs processeurs matériels, d'une pluralité d'images de culture d'un ou plusieurs champs de culture et d'un âge de culture calculé à partir d'un jour de plantation au jour actuel, dans lequel, pour chaque culture, le dispositif de capture d'images capture une vue de dessus, une vue de face, une vue de côté droit et une vue de côté gauche et chaque champ de culture inclut deux plantes cultivées ou plus ;
la détermination (304), par un réseau d'apprentissage profond à passe unique entraîné exécuté par les un ou plusieurs processeurs matériels, d'un stade de croissance de culture actuel à partir d'une pluralité de stades de croissance de culture pour chaque culture en extrayant une pluralité de caractéristiques morphologiques associées à la culture, dans lequel la pluralité de stades de croissance de culture comprennent au moins l'un d'un stade végétatif, d'un stade de floraison et d'un stade de maturité ;
le calcul (306), via les un ou plusieurs processeurs matériels, d'une valeur d'indice de nutrition végétale équilibrée (BPNI) pour classer un état de santé de la culture dans l'une d'une culture saine ou d'une culture malsaine sur la base de caractéristiques morphologiques saines, du stade de croissance de culture de la culture et de la pluralité de caractéristiques morphologiques ;
la segmentation (308), via les un ou plusieurs processeurs matériels, de la culture malsaine en une pluralité de régions comprenant une feuille inférieure, une feuille médiane, une feuille supérieure et une région de bourgeon terminal sur la base d'une longueur de pixel, et l'identification d'au moins une zone affectée associée à la pluralité de régions, dans lequel la zone affectée inclut au moins l'une d'une décoloration de feuille et d'une feuille ayant des rayures blanches, une tache nécrotique, un enroulement, des brûlures et des taches ;
l'identification (310), via les un ou plusieurs processeurs matériels, d'une pluralité de carences en nutriments correspondant au stade de croissance de culture actuel de la culture malsaine sur la base de la zone affectée associée à au moins une région ;
le calcul (312), pour la culture malsaine via les un ou plusieurs processeurs matériels sur la base du stade de croissance de culture correspondant, (i) d'un premier pourcentage déficient en nutriments pour chaque carence ayant des nutriments de haute importance et (ii) d'un second pourcentage déficient en nutriments de chaque carence ayant des nutriments de faible importance ;
le calcul (314), pour la culture malsaine via les un ou plusieurs processeurs matériels, d'un premier score de carence en nutriments et d'un second score de carence en nutriments, dans lequel le premier score de carence est un produit d'une moyenne de pourcentage déficient en nutriments de tous les nutriments de haute importance et d'un poids élevé, dans lequel le second score de carence est le produit d'une moyenne de pourcentage déficient en nutriments de tous les nutriments de faible importance et d'un poids faible ; et
le calcul (316), via les un ou plusieurs processeurs matériels, d'un score de carence en nutriments total pour des nutriments déficients de la culture malsaine en faisant la moyenne d'une somme du premier score de carence en nutriments, du second score de carence en nutriments et du BPNI, et la recommandation des nutriments déficients pour la culture malsaine lorsque le score de carence en nutriments total est au moins dans une plage de niveau.

2. Procédé mis en œuvre par processeur selon la revendication 1, dans lequel le stade de croissance de culture de la culture est classé dans l'un (i) du stade végétatif lorsque des feuilles trifoliaires sans fleurs et sans gousses sont détectées (ii) du stade de floraison lorsque des fleurs sont détectées et (iii) du stade de maturité lorsque des gousses sont détectées.

3. Procédé mis en œuvre par processeur selon la revendication 1, dans lequel la santé de culture de chaque culture est déterminée par,
le comptage d'un nombre de fleurs, d'un nombre de fruits, d'un nombre de branches, d'un nombre de nœuds et d'un nœud intermédiaire, et la mesure de la hauteur de plante, de la longueur de feuille, d'une largeur de feuille, d'une surface de feuille moyenne, d'une taille de nœud intermédiaire, d'une longueur de nœud intermédiaire, d'une longueur de fruit, d'une largeur de fruit, d'une épaisseur de fruit en comptant le nombre de pixels ; et
la détermination des caractéristiques morphologiques saines de la culture pour le stade de croissance de culture correspondant si la pluralité de caractéristiques morphologiques sont supérieures aux valeurs d'un ensemble de données de référence.

4. Procédé mis en œuvre par processeur selon la revendication 3, dans lequel l'ensemble de données de référence comprend au moins l'un d'une hauteur de plante, d'une longueur de feuille, d'une largeur de feuille, d'une surface de feuille moyenne, d'une taille de nœud intermédiaire, d'une longueur de nœud intermédiaire, d'une longueur de fruit, d'une largeur de fruit, d'une épaisseur de fruit, d'une couleur de feuille, d'un nombre de nœuds, d'un nombre de nœuds intermédiaires, d'un nombre de feuilles de plante, d'un nombre de branches, d'un nombre de fleurs, d'un fruit et d'un nombre de talles.

5. Procédé mis en œuvre par processeur selon la revendication 1, dans lequel l'état de santé de la culture est classé comme une culture saine lorsque la valeur BPNI est inférieure à une valeur de seuil prédéfinie, et une culture malsaine lorsque la valeur BPNI est égale ou supérieure à la valeur de seuil prédéfinie.

6. Procédé mis en œuvre par processeur selon la revendication 1, recommandant les nutriments déficients pour la culture malsaine,
dans lequel un faible niveau de carence en nutriments de culture avec des nutriments déficients correspondants est recommandé lorsque le score de carence en nutriments total est dans une première plage de niveau,
dans lequel un niveau de carence en nutriments de culture moyen avec des nutriments déficients correspondants est recommandé lorsque le score de carence en nutriments total est dans une deuxième plage de niveau, et
dans lequel un niveau de carence en nutriments de culture élevé avec des nutriments déficients correspondants est recommandé lorsque le score de carence en nutriments total est dans une troisième plage de niveau.

7. Système (100) pour déterminer des carences en nutriments au stade de croissance de culture comprenant :
une mémoire (102) stockant des instructions ;
une ou plusieurs interfaces de communication (106) ; et
un ou plusieurs processeurs matériels (104) couplés à la mémoire (102) via les une ou plusieurs interfaces de communication (106), dans lequel les un ou plusieurs processeurs matériels (104) sont configurés par les instructions pour
recevoir, en provenance d'un dispositif de capture d'images, une pluralité d'images de culture d'un ou plusieurs champs de culture et un âge de culture calculé à partir d'un jour de plantation au jour actuel, dans lequel, pour chaque culture, le dispositif de capture d'images capture une vue de dessus, une vue de face, une vue de côté droit et une vue de côté gauche et chaque champ de culture inclut deux plantes cultivées ou plus ;
déterminer, par un réseau d'apprentissage profond à passe unique entraîné, un stade de croissance de culture à partir d'une pluralité de stades de croissance de culture pour chaque culture en extrayant une pluralité de caractéristiques morphologiques associées à la culture, dans lequel la pluralité de stades de croissance de culture comprennent au moins l'un d'un stade végétatif, d'un stade de floraison et d'un stade de maturité ;
calculer une valeur d'indice de nutrition végétale équilibrée (BPNI) pour classer un état de santé de la culture dans l'une d'une culture saine ou d'une culture malsaine sur la base de caractéristiques morphologiques saines, du stade de croissance de culture de la culture et de la pluralité de caractéristiques morphologiques ;
segmenter la culture malsaine en une pluralité de régions comprenant une feuille inférieure, une feuille médiane, une feuille supérieure et une région de bourgeon terminal sur la base d'une longueur de pixel, et identifier au moins une zone affectée associée à la pluralité de régions, dans lequel la zone affectée inclut au moins l'une d'une décoloration de feuille et d'une feuille ayant des rayures blanches, une tache nécrotique, un enroulement, des brûlures et des taches ;
identifier une pluralité de carences en nutriments correspondant au stade de croissance de culture actuel de la culture malsaine sur la base de la zone affectée associée à au moins une région ;
calculer, pour la culture malsaine sur la base du stade de croissance de culture correspondant, (i) un premier pourcentage déficient en nutriments pour chaque carence ayant des nutriments de haute importance et (ii) un second pourcentage déficient en nutriments de chaque carence ayant des nutriments de faible importance ;
calculer, pour la culture malsaine, un premier score de carence en nutriments et un second score de carence en nutriments, dans lequel le premier score de carence est un produit d'une moyenne de pourcentage déficient en nutriments de tous les nutriments de haute importance et d'un poids élevé, dans lequel le second score de carence est le produit d'une moyenne de pourcentage déficient en nutriments de tous les nutriments de faible importance et d'un poids faible ; et
calculer un score de carence en nutriments total pour des nutriments déficients de la culture malsaine en faisant la moyenne d'une somme du premier score de carence en nutriments, du second score de carence en nutriments et du BPNI, et recommander les nutriments déficients pour la culture malsaine lorsque le score de carence en nutriments total est au moins dans une plage de niveau.

8. Système selon la revendication 7, dans lequel le stade de croissance de culture de la culture est classé dans l'un (i) du stade végétatif lorsque des feuilles trifoliaires sans fleurs et sans gousses sont détectées (ii) du stade de floraison lorsque des fleurs sont détectées et (iii) du stade de maturité lorsque des gousses sont détectées.

9. Système selon la revendication 7, dans lequel la santé de culture de chaque culture est déterminée par,
le comptage d'un nombre de fleurs, d'un nombre de fruits, d'un nombre de branches, d'un nombre de nœuds et d'un nœud intermédiaire, et la mesure de la hauteur de plante, de la longueur de feuille, d'une largeur de feuille, d'une surface de feuille moyenne, d'une taille de nœud intermédiaire, d'une longueur de nœud intermédiaire, d'une longueur de fruit, d'une largeur de fruit, d'une épaisseur de fruit en comptant le nombre de pixels ; et
la détermination des caractéristiques morphologiques saines de la culture pour le stade de croissance de culture correspondant si la pluralité de caractéristiques morphologiques sont supérieures aux valeurs d'un ensemble de données de référence.

10. Système selon la revendication 9, dans lequel l'ensemble de données de référence comprend au moins l'un d'une hauteur de plante, d'une longueur de feuille, d'une largeur de feuille, d'une surface de feuille moyenne, d'une taille de nœud intermédiaire, d'une longueur de nœud intermédiaire, d'une longueur de fruit, d'une largeur de fruit, d'une épaisseur de fruit, d'un nombre de nœuds, d'un nombre de nœuds intermédiaires, d'un nombre de feuilles de plante, d'un nombre de branches, d'un nombre de fleurs, d'un fruit et d'un nombre de talles.

11. Système selon la revendication 7, dans lequel l'état de santé de la culture est classé comme une culture saine lorsque la valeur BPNI est inférieure à une valeur de seuil prédéfinie, et une culture malsaine lorsque la valeur BPNI est égale ou supérieure à la valeur de seuil prédéfinie.

12. Système selon la revendication 7, recommandant les nutriments déficients pour la culture malsaine,
dans lequel un faible niveau de carence en nutriments de culture avec des nutriments déficients correspondants est recommandé lorsque le score de carence en nutriments total est dans une première plage de niveau,
dans lequel un niveau de carence en nutriments de culture moyen avec des nutriments déficients correspondants est recommandé lorsque le score de carence en nutriments total est dans une deuxième plage de niveau, et
dans lequel un niveau de carence en nutriments de culture élevé avec des nutriments déficients correspondants est recommandé lorsque le score de carence en nutriments total est dans une troisième plage de niveau.

13. Un ou plusieurs supports de stockage d'informations lisibles par machine non transitoires comprenant une ou plusieurs instructions qui, lorsqu'elles sont exécutées par un ou plusieurs processeurs matériels, amènent :
la réception, en provenance d'un dispositif de capture d'images, d'une pluralité d'images de culture d'un ou plusieurs champs de culture et d'un âge de culture calculé à partir d'un jour de plantation au jour actuel, dans lequel, pour chaque culture, le dispositif de capture d'images capture une vue de dessus, une vue de face, une vue de côté droit et une vue de côté gauche et chaque champ de culture inclut deux plantes cultivées ou plus ;
la détermination, par un réseau d'apprentissage profond à passe unique entraîné, d'un stade de croissance de culture actuel à partir d'une pluralité de stades de croissance de culture pour chaque culture en extrayant une pluralité de caractéristiques morphologiques associées à la culture, dans lequel la pluralité de stades de croissance de culture comprennent au moins l'un d'un stade végétatif, d'un stade de floraison et d'un stade de maturité ;
le calcul d'une valeur d'indice de nutrition végétale équilibrée (BPNI) pour classer un état de santé de la culture dans l'une d'une culture saine ou d'une culture malsaine sur la base de caractéristiques morphologiques saines, du stade de croissance de culture de la culture et de la pluralité de caractéristiques morphologiques ;
la segmentation de la culture malsaine en une pluralité de régions comprenant une feuille inférieure, une feuille médiane, une feuille supérieure et une région de bourgeon terminal sur la base d'une longueur de pixel, et l'identification d'au moins une zone affectée associée à la pluralité de régions, dans lequel la zone affectée inclut au moins l'une d'une décoloration de feuille et d'une feuille ayant des rayures blanches, une tache nécrotique, un enroulement, des brûlures et des taches ;
l'identification d'une pluralité de carences en nutriments correspondant au stade de croissance de culture actuel de la culture malsaine sur la base de la zone affectée associée à au moins une région ;
le calcul, pour la culture malsaine sur la base du stade de croissance de culture correspondant, (i) d'un premier pourcentage déficient en nutriments pour chaque carence ayant des nutriments de haute importance et (ii) d'un second pourcentage déficient en nutriments de chaque carence ayant des nutriments de faible importance ;
le calcul, pour la culture malsaine, d'un premier score de carence en nutriments et d'un second score de carence en nutriments, dans lequel le premier score de carence est un produit d'une moyenne de pourcentage déficient en nutriments de tous les nutriments de haute importance et d'un poids élevé, dans lequel le second score de carence est le produit d'une moyenne de pourcentage déficient en nutriments de tous les nutriments de faible importance et d'un poids faible ; et
le calcul d'un score de carence en nutriments total pour des nutriments déficients de la culture malsaine en faisant la moyenne d'une somme du premier score de carence en nutriments, du second score de carence en nutriments et du BPNI, et la recommandation des nutriments déficients pour la culture malsaine lorsque le score de carence en nutriments total est au moins dans une plage de niveau.

14. Un ou plusieurs supports de stockage d'informations lisibles par machine non transitoires selon la revendication 13, dans lequel le stade de croissance de culture de la culture est classé dans l'un (i) du stade végétatif lorsque des feuilles trifoliaires sans fleurs et sans gousses sont détectées (ii) du stade de floraison lorsque des fleurs sont détectées et (iii) du stade de maturité lorsque des gousses sont détectées.

15. Un ou plusieurs supports de stockage d'informations lisibles par machine non transitoires selon la revendication 13, dans lequel la santé de culture de chaque culture est déterminée par,
le comptage d'un nombre de fleurs, d'un nombre de fruits, d'un nombre de branches, d'un nombre de nœuds et d'un nœud intermédiaire, et la mesure de la hauteur de plante, de la longueur de feuille, d'une largeur de feuille, d'une surface de feuille moyenne, d'une taille de nœud intermédiaire, d'une longueur de nœud intermédiaire, d'une longueur de fruit, d'une largeur de fruit, d'une épaisseur de fruit en comptant le nombre de pixels ; et
la détermination des caractéristiques morphologiques saines de la culture pour le stade de croissance de culture correspondant si la pluralité de caractéristiques morphologiques sont supérieures aux valeurs d'un ensemble de données de référence.
